Europäisches Patentamt

European Patent Office

Office européen des brevets

(19)

(11) Veröffentlichungsnummer: **0 203 944**
**B1**

# EUROPÄISCHE PATENTSCHRIFT

(12)

(45) Veröffentlichungstag der Patentschrift:
18.05.88

(21) Anmeldenummer: 85905768.9

(22) Anmeldetag: 07.11.85

(86) Internationale Anmeldenummer:
PCT/DE 85/00442

(87) Internationale Veröffentlichungsnummer:
WO 86/03574 (19.06.86 Gazette 86/13)

(51) Int. Cl.⁴: **F 23 D 14/62**

(54) MISCHBLOCK ZUM MISCHEN EINES BRENNBAREN GASGEMISCHES.

(30) Priorität: 07.12.84 DE 3444640

(43) Veröffentlichungstag der Anmeldung:
10.12.86 Patentblatt 86/50

(45) Bekanntmachung des Hinweises auf die Patenterteilung:
18.05.88 Patentblatt 88/20

(84) Benannte Vertragsstaaten:
CH DE FR GB IT LI

(56) Entgegenhaltungen:
DE-A-2 107 810
DE-A-3 015 393
DE-C-352 960
DE-C-378 303
FR-A-1 072 610
GB-A-2 049 225
US-A-1 432 528
US-A-2 799 288

(73) Patentinhaber: ROBERT BOSCH GMBH, Postfach
50, D-7000 Stuttgart 1 (DE)

(72) Erfinder: SAUTER, Roland, Maierhofstrasse 27,
D-7000 Stuttgart 31 (DE)

## Beschreibung

### Stand der Technik

Die Erfindung geht aus von einem Mischblock nach der Gattung des Patentanspruchs 1. Bei den besonders in Bezug genommenen bekannten Maschinen zum thermischen Entgraten findet unter dem Einfluß von Wärme ein chemischer Prozeß statt. Beim thermischen Entgraten wird der abzutragende Werkstoff mit Sauerstoff oxydiert bzw. verbrannt. Der zum Entgraten notwendige Hitzeschock wird durch das Abbrennen eines Brenngas-Sauerstoffgemisches erzeugt, wobei z. B. Wasserstoff oder Erdgas bzw. Methan als Brenngas verwendet werden können. Um die notwendige Energiefreisetzen zu können, muß das Gasgemisch vor dem Zünden komprimiert werden. Dies geschieht in der Regel mit Hilfe von Dosierzylindern und Gaseinstoßkolben. Die Vermischung der Gaskomponenten und Zündung des Brenngas-Sauerstoffgemisches erfolgt in einem Mischblock.

Ein solcher Mischblock ist beispielsweise in der DE-OS-2 439 982 beschrieben. Er besteht aus einem einstückigen Gehäuse, in welchem sich eine Mischkammer und eine Zündeinrichtung befinden. Die Mischkammer ist über verhältnismäßig lange Leitungen (Gaszuführungsbohrungen) mit Gaszuführungsanschlüssen am Mischblock verbunden. Dazwischen sind Ventile angeordnet, die die Gaszufuhr unterbrechen können. Die langen Leitungen dienen zum Schutz der Ventile beim Durchzünden des stark komprimierten Gasgemisches.

In den Gaszuführungsbohrungen entstehen beim Einschieben der Gaskomponenten Druckverluste, deren Größe von der Strömungsgeschwindigkeit des Gases in der Bohrung, der Dichte des strömenden Gases, der dynamischen Viskosität, der Bohrunglänge, der lichten Weite der Bohrung und dem Rohrreibungswert abhängig ist. Bei den bekannten Mischblöcken werden Gaszuführungsbohrungen benutzt, die gleiche Länge, gleiche lichte Weite und gleichen Rohrreibungswert haben. Die verwendeten Gase haben dagegen unterschiedliche physikalische Kennwerte. So beträgt, bezogen auf Luft = 1, die Dichte von Sauerstoff 1,1, die Dichte von Methan 0,6 und die Dichte von Wasserstoff 0,07. Dies hat zur Folge, daß beim Einschieben der Gase in der Sauerstoffzuführungsbohrung ein erheblich größerer Druckverlust entsteht als in der Zuführungsbohrung des verwendeten Brenngases (Methan oder Wasserstoff). Am Ende des Gaseinschubvorganges ist demzufolge der Druck in der Sauerstoffbohrung höher als der Druck in der Brenngasbohrung. Der Sauerstoff strömt weiter, bis Druckausgleich im Leitungssystem vorhanden ist. Dadurch verändert sich das örtliche Mischungsverhältnis im Bereich der Mischkammer und der Zündstelle in Richtung Sauerstoffüberschuß. Als Folge hiervon treten Zündaussetzer und unkontrollierte Verbrennungsabläufe auf, die einen unnötigen Gasverbrauch bzw. Beschädigungen der Anlage und der zu behandelnden Materialen infolge übermäßig hoher Temperaturen und Drücke verursachen.

### Vorteile der Erfindung

Die erfindungsgemäße Vorrichtung mit den kennzeichnenden Merkmalen des Patentanspruchs 1 hat demgegenüber den Vorteil, daß eine gleichmäßige Durchmischung der Gaskomponenten und ein konstantes Mischungsverhältnis über den gesamten Einschubvorgang gewährleistet ist. Dies deshalb, weil die Gaszuführungsbohrungen unter Berücksichtigung der unterschiedlichen Gasmengen und der sehr unterschiedlichen physikalischen Größen der miteinander zu vermischenden Gase so dimensioniert sind, daß der Druckverlust in den Bohrungen für alle Gaskomponenten zumindest annähernd gleich groß ist. Dadurch ist sichergestellt, daß am Ende des Gaseinschubvorgangs die Gase im Bereich der Mischkammer und der Zündstelle stets im richtigen Verhältnis gemischt sind und das Mischungsverhältnis nicht durch nachströmenden Sauerstoff verfälscht wird. Auf diese Weise konnten Zündwilligkeit und Reproduzierbarkeit des Entgratergebnisses entscheidend verbessert werden. Dies ist bei thermischen Entgratanlagen insofern besonders wichtig, als bei Aurtreten von Zündaussetzern der Brennraum jedes Mal über ein Entlüftungsventil evakuiert werden muß, wodurch eine beträchtliche Gasmenge ungenutzt bleibt. Die Entlüftung des Brennraums muß verhältnismäßig langsam erfolgen, da sonst die Gefahr einer unkontrollierten Zündung des Gasgemisches entsteht. Unkontrollierte Verbrennungsabläufe, die durch ungenügende Durchmischung der Gaskomponenten und variierendes Mischungsverhältnis über den Füllvorgang verursacht werden, können übermäßig hohe Verbrennungstemperaturen und Drücke hervorrufen, welche die zu bearbeitenden Materialien zerstören und die Anlage selbst beschädigen.

Durch die in den Unteransprüchen aufgeführten Maßnahmen sind vorteilhafte Weiterbildungen und Verbesserungen des im Patentanspruch 1 angegebenen Mischblocks möglich. Eine herstellungtechnisch besonders einfache Bauart zur Korrektur der Druckverluste der Gaskomponenten in Richtung auf gleiche Werte besteht darin, daß die Gaszuführungsbohrungen abhängig von den physikalischen Kenngrößen und der unterschiedlichen Menge der in der jeweiligen Bohrung strömenden Gaskomponente unterschiedlich große lichte Weiten aufweisen.

Statt dessen können die Gaszuführungsbohrungen auch unterschiedlich lang gemacht werden oder unterschiedliche Rauhigkeit haben. Es ist auch möglich, die vorstehend aufgezeigten Möglichkeiten zu kombinieren, d.h. Gaszuführungsbohrungen zu benutzen, die abhängig von den physikalischen Kenngrößen der in der jeweiligen Bohrung strömenden Gaskomponente sowohl unterschiedliche Durchmesser als auch unterschiedliche Länge und Rauhigkeit haben.

## Zeichnung

Weitere Merkmale und Einzelheiten der Erfindung ergeben sich aus der nachfolgenden Beschreibung anhand eines in der Zeichnung dargestellten Ausführungsbeispiels. Es zeigen Figur 1 eine schematische Schnittdarstellung einer Anlage zum thermischen Entgraten von Werkstücken. Figuren 2 und 3 Schnittdarstellungen eines Mischblocks der Anlage in zwei parallelen Ebenen.

## Beschreibung des Ausführungsbeispiels

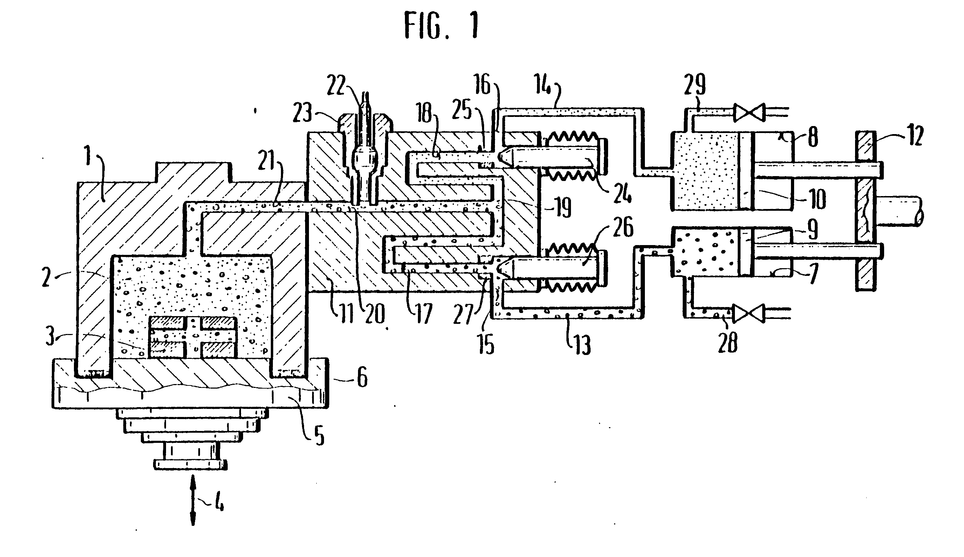

In Figur 1 ist mit 1 eine Werkstück-Bearbeitungskammer bezeichnet, die einen Brennraum 2 hat, in dem sich ein zu entgratendes Werkstück 3 befindet. Das Werkstück 3 ruht hierbei auf einem in Richtung des Doppelpfeils 4 bewegbaren Teller 5, welcher vor Auslösung des Entgratvorgangs an die Stirnfläche der Werkstück-Bearbeitungskammer 1 angelegt wird. Zwischen Teller 5 und Stirnfläche ist eine Dichtung 6 angeordnet.

Die Gaskomponenten des Brenngas-Sauerstoffgemisches werden über einen Dosierzylinder 7 für Brenngas bzw. einen Dosierzylinder 8 für Sauerstoff mittels je eines Gaseinstoßkolbens 9 bzw. 10 in einen Mischblock 11 eingebracht. Die Kolben 9, 10 sind durch ein Joch 12 miteinander gekoppelt, so daß sie unter dem Einfluß einer am Joch 12 angreifenden Kraft Hübe gleicher Größe ausführen. Es sind auch Systeme mit hydraulischer Kopplung der Gaseinstoßkolben bekannt. Der Dosierzylinder 8 für Sauerstoff hat ein größeres Volumen als der Dosierzylinder 7 für Brenngas, so daß bei gleichem Fülldruck im Zylinder 8 eine größere Sauerstoffmenge vorhanden ist. Als Standardgemisch ist ein Gemisch mit 100 % Sauerstoffüberschuß anzusehen, wobei als Brenngas Wasserstoff oder Erdgas bzw. Methan verwendet wird. Metalle werden in jedem Fall mit einem Sauerstoffüberschuß entgratet, da sonst nur ein Anschmelzen, aber keine Verbrennung der Grate stattfinden würde. Nur bei Kunststoffen wird gelegentlich der oxidationsfreie Schmelzprozeß angewandt.

Von den Dosierzylindern 7, 8 führt je eine druckfeste Leitung 13 bzw. 14 in den Mischblock 11, der aus einem massiven Metallblock besteht. Die Leitungen 13, 14 münden in je eine Anschlußbohrung 15 bzw. 16 im Mischblock 11, an die sich Gaszuführungsbohrungen 17 bzw. 18 anschließen. Die Bohrungen 17, 18 führen zu einer Mischkammer 19, von welcher eine Gasabführungsbohrung 2a abgeht, die das brennbare Gasgemisch über eine in der Bearbeitungskammer 1 ausgebildete Bohrung 21 in den Brennraum 2 der Kammer leitet. Zum Zünden des Gemisches dient eine in die Gasabführungsbohrung 20 hineinragende Zündkerze 22, die in einem Einsatz 23 des Mischblocks 11 sitzt. Anstelle einer Zündkerze kann auch eine Glühkerze oder ein anderer geeigneter Zünder verwendet werden. Zwischen den Bohrungen 15, 16 und 17, 18 befindet sich je ein Ventil 24, 25 bzw. 26, 27. Diese Ventile werden am Beginn des Gaseinstoßvorgangs geöffnet und nach Abschluß des Gaseinstoßes, wenn die Kolbens 9, 10 in ihre Endstellung erreicht haben und sich kein Gas mehr in den Zylindern 7, 8 befindet, wieder geschlossen.

Die Anlage arbeitet wie folgt: Brenngas und Sauerstoff werden über Leitungen 28, 29 mit einem Druck von beispielsweise 5 bar in die Zylinder 7, 8 eingelassen. Nachdem die Zylinder gefüllt sind schieben die Einstoßkolben 9, 10 die Gase über den Mischblock 11 in den Brennraum 2 der geschlossenen Werkstück-Bearbeitungskammer 1 und verdichten sie dort zu dem sogenannten Kammerfülldruck. Dieser kann je nach Art des werwendeten Brenngases und des Werkstoffes der zu bearbeitenden Werkstücke bis zu 50 bar betragen. In der Mischkammer 19 des Mischblocks 11 werden die beiden Gase (Sauerstoff und Brenngas) miteinander vermischt und nach dem Füllvorgang mittels der Zündkerze 22 gezundet. Die Flammenfront schreitet dann über die Bohrung 21 zum Brennraum 2 fort. Bei der Explosion tritt im Brennraum kurzzeitig ein Druck bis zu 700 bar und Temperaturen in der Großenordnung von 3500° C auf.

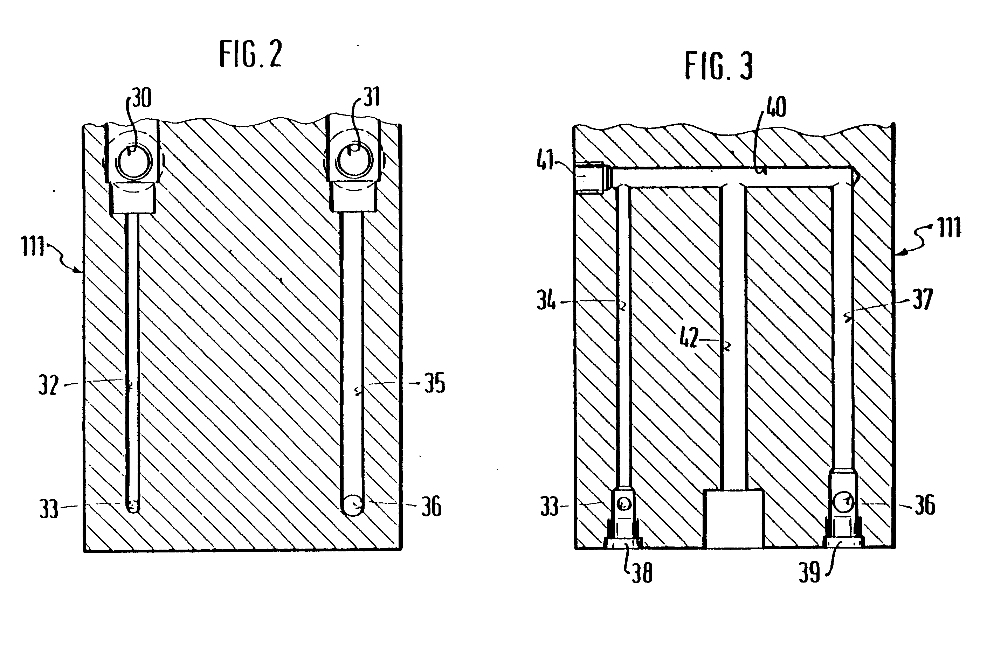

Einzelheiten eines Mischblocks 111 sind aus den Figuren 2 und 3 ersichtlich. Figur 2 zeigt die beiden Anschlußbohrungen des Mischblocks 111, die als Sacklochbohrungen 30 bzw. 31 ausgebildet sind. Die sich an diese Bohrungen anschliessenden Gaszuführungsbohrungen bestehen aus je drei senkrecht zueinander verlaufenden und miteinander verbundenen Bohrungen 32, 33, 34 bzw. 35, 36, 37. Zwei in Figur 3 sichtbare Gewindestopfen für die Bohrungen 34 und 37 sind mit 38 bzw. 39 bezeichnet.

Die Bohrungen 34 und 37 münden in eine als Mischkammer dienende Querbohrung 40, die gleichfalls durch einen Gewindestopfen 41 verschlossen ist. Von der Querbohrung 40 geht eine Gasabführungsbohrung 42 ab, an die sich die in der Werkstück-Bearbeitungskammer 1 ausgebildete Bohrung 21 anschließt. Die Bohrung 42 wird auch als Zündkanal bezeichnet, weil in ihr die Zündung des Gasgemisches erfolgt.

Bei den bekannten Mischblöcken haben die der Zuführung von Sauerstoff und Brenngas zur Mischkammer dienenden Bohrungen gleiche Länge und gleichen Durchmesser. Dies hat zur Folge, daß der Druckverlust in der Sauerstoffbohrung infolge der größeren dynamischen Zähigkeit und der größeren Menge dieses Gases erheblich größer ist als der Druckabfall in der Brenngasbohrung. Dadurch entsteht am Ende des Einschubvorgangs in den Sauerstoff führenden Bohrungen ein höherer Druck als in den Zuführbohrungen für Brenngas. Dies hat zur Folge, daß der Sauerstoff beim Füllvorgang nachströmt, und zwar so lange, bis im Leitungssystem Druckausgleich herrscht. In der Mischkammer und in der Gasabführungsbohrung bildet sich dadurch ein Gasgemisch, dessen Sauerstoffanteil größer ist als im Mischungsverhältnis ursprunglich vorgesehen. Da ein Brenngas-Sauerstoffgemisch mit sehr hohem Sauerstoffanteil zündunwillig ist entstehen Zündaussetzer und unkontrollierte Verbrennungsabläufe, die Beschädigungen bzw. eine Zerstörung der im Brennraum 2 befindlichen Werkstücke verursachen können.

Um diesen Mängeln bekannter thermischer Entgratanlagen abzuhelfen sind die Zuführungsbohrungen 18 bzw. 35, 36, 37 für Sauerstoff und die Zuführungsbohrungen 17 bzw. 32, 33, 34 für Brenngas so ausgebildet, daß das Verhältnis der Menge der zu vermischenden Gase zu jedem Zeitpunkt des Einschubvorgangs zumindest annähernd gleich ist. Dadurch ist ein Nachströmen der einen oder anderen Gaskomponente, welches das Mischungsverhältnis im Bereich der Zündstelle verfälscht, wirksam beseitigt. Die Korrektur der unterschiedlichen Druckverluste der Gaskomponenten abhangig von deren physikalischen Kenngrößen ist im Ausführungsbeispiel dadurch erreicht, daß die Sauerstoffbohrungen 33, 36, 37 im Mischblock 111 einen entsprechend größeren Durchmesser aufweisen als die Brenngasbohrungen 32, 33, 34. Die Gesamtlänge der beiden Bohrungen ist dabei gleich, ebenso ihre Rauhigkeit. Bei Verwendung von Methan als Brenngas kann der Durchmesser der Brenngasbohrungen 5 mm betragen, während die Sauerstoffbohrungen einen Durchmesser von 7 mm haben. Das Durchmesserverhältnis kann gemäß der Forderung:

$\Delta$p Brenngas $= \Delta$p Sauerstoff

und der physikalischen Gesetzmäßigkeit:

$$\Delta p = \xi \cdot \rho/2 \cdot c^2$$
$$= \lambda \cdot l/d \cdot \rho/2 \cdot c^2$$

ermittelt werden.

Dabei ist p = Druckverlust, $\xi$ = Verlustfaktor, $\rho$ = Dichte, c = Geschwindigkeit, l = Leitungslänge, d = Leitungsdurchmesser, $\lambda$ = Rohrreibungszahl.

Anstelle von Gaszuführungsbohrungen mit unterschiedlichen Durchmessern können auch Bohrungen mit gleichem Durchmesser, jedoch unterschiedlicher Länge verwendet werden, wobei die Gesamtlänge der Sauerstoff führenden Bohrung aufgrund der physikalischen Kennwerte von Sauerstoff entsprechend kleiner gewählt werden muß als die Länge der Brenngasbohrung. Eine solche Ausführung ist in Figur 1 beim Mischblock 11 gezeigt. Eine Korrektur des Druckverlusts des Brenngases in Richtung auf den Druckverlust des Sauerstoffs läßt sich ferner auch dadurch erreichen, daß die Brenngasbohrung dem Strömen des Gases einen größeren Widerstand entgegensetzt, was durch höhere Rauhigkeit der Bohrung oder Einbau von Drosseln, Blenden und dergleichen erreicht werden kann.

Die Erfindung ist gleichermaßen geeignet für thermische Entgratanlagen, die einen separaten, an die Werkstück-Bearbeitungskammer angeflanschten Mischblock besitzen als auch für solche, bei denen Gaskomponenten über getrennte Zuleitungen direkt in die Werkstück-Bearbeitungskammer eingelassen und erst dort gemischt und nach der Vermischung gezündet werden. Auch in diesem Falle ist durch die Korrektur der unterschiedlichen Druckverluste der in den Leitungen strömenden Gaskomponenten in Richtung gleicher Werte gewährleistet, daß das Verhälnis der Menge der zu vermischenden Gase zu jedem Zeitpunkt das Gaseinschubs dem Sollverhältnis entspricht. Außerdem ist die Erfindung auch bei thermischen Entgratanlagen anwendbar, bei denen die Gaskomponenten unmittelbar aus Vorratsbehältern mit entsprechendem Druck in einen Mischblock bzw. in den als Mischblock dienenden Brennraum einer Werkstück-Bearbeitungskammmer eingelassen werden.

**Patentansprüche**

1. Mischblock zum Mischen eines aus mindestens zwei Komponenten bestehenden, brennbaren Gasgemisches zur Behandlung von Materialien mittels Temperatur- und Druckstößen durch Zünden des Gasgemisches, insbesondere für thermische Entgratanlagen, mit einem Gehäuse, das für jede Gaskomponente eine an eine Gasdosiervorrichtung angeschlossene und in eine Mischkammer mündende Gaszuführungsbohrung enthält und einer Zündvorrichtung innerhalb des Mischblocks, gekennzeichnet durch eine solche Ausbildung der Gaszuführungsbohrungen (17, 18 bzw. 32 bis 37), daß jede Bohrung bei der in ihr strömenden Gaskomponente abhängig von deren physikalischen Kenngrößen einen Druckverlust solcher Größe hervorruft, daß die Gase mit zumindest annähernd gleichem Druck in die Mischkammer (19 bzw. 40) eintreten.

2. Mischblock nach Anspruch 1, dadurch gekennzeichnet, daß die Gaszuführungsbohrungen (32, 33, 34; 35, 36, 37) abhängig von den physikalischen Kenngrößen der in der jeweiligen Bohrung strömenden Gaskomponente unterschiedlich große lichte Weiten aufweisen.

3. Mischblock nach Anspruch 1 oder 2, dadurch gekennzeichner, daß die Gaszuführungsbohrungen (17, 18) abhänging von den physlikalischen Kenngrößen der in der jeweiligen Bohrung strömenden Gaskomponente unterschiedlich lang sind.

4. Mischblock nach einem der Ansprüche 1 bis 3, dadurch gekennzeichnet, daß die Wandungen der Gaszuführungsbohrungen (17; 18 bzw. 32, 33, 34; 35, 36, 37) abhängig von den physikalischen Kenngrößen der in der jeweiligen Leitung strömenden Gaskomponente unterschiedliche Rauhigkeit aufweisen.

5. Mischblock nach einem der vorhergehenden Ansprüche, dadurch gekennzeichnet, daß die Gaszuführungsbohrungen (17; 18 bzw. 32, 33, 34; 35, 36, 37) über eine als Mischkammer (19) dienende Querbohrung (40) miteinander verbunden sind, und daß von der Querbohrung eine Gasabführungsbohrung (20 bzw. 42) abgeht, welche das brennbare Gasgemisch in einen Brennraum (2) leitet.

6. Mischblock nach einem der Ansprüche 1 bis 4, dadurch gekennzeichnet, daß die Gaszuführungsbohrungen in der Wand einer einen Brennraum (2) enthaltenden Werkstück-Bearbeitungskammer (1) ausgebildet sind und der Brennraum die Mischkammer für die Gaskomponenten bildet.

## Claims

1. Mixing block for mixing a combustible gas mixture comprising at least two components, for treatment of materials by means of temperature and pressure shocks by igniting the gas mixture, in particular for thermal flash trimmers, having a housing which, for each gas component, contains a gas supply bore which is connected to a gas proportioning device and runs into a mixing chamber, and an ignition device inside the mixing block, characterized by a design of the gas supply bores (17 and 18 or 32 and 37) such that each bore causes, in the gas component flowing in it, depending on the physical characteristic quantities of the gas, a pressure loss of a magnitude such that the gases enter the mixing chamber (19 or 40) with at least approximately equal pressure.

2. Mixing block according to Claim 1, characterized in that the gas supply bores (32, 33, 34; 35, 36, 37) have different internal diameters depending on the physical characteristic quantities of the gas component flowing in the particular bore.

3. Mixing block according to Claim 1 or 2, characterized in that the gas supply bores (17 and 18) have different length depending on the physical characteristic quantities of the gas component flowing in the particular bore.

4. Mixing block according to any one of Claims 1 to 3, characterized in that the walls of the gas supply bores (17; 18 or 32, 33, 34; 35, 36, 37) have different roughnesses depending on the physical characteristic quantities of the gas component flowing in the particular line.

5. Mixing block according to any one of the previous claims, characterized in that the gas supply bores (17; 18 or 32, 33, 34; 35, 36, 37) are connected to one another via a cross bore (40) serving as a mixing chamber (19) and in that a gas outlet bore (20 or 42) which transports the combustible gas mixture into a combustion chamber (2) emanates from the cross bore.

6. Mixing block according to any one of Claims 1 to 4, characterized in that the gas supply bores are formed in the wall of a workpiece processing chamber (1) containing a combustion chamber (2) and the combustion chamber forms the mixing chamber for the gas components.

## Revendications

1. Bloc de mélange pour obtenir un mélange de gaz combustible, composé d'au moins deux composants, pour le traitement de matériaux au moyen de chocs de température et de pression, par allumage du mélange de gaz, en particulier pour les installations thermiques d'ébarbage, avec un carter, qui contient, pour chaque composant de gaz, une amenée de gaz, raccordée à un dispositif de dosage de gaz et débouchant dans une chambre de mélange et un dispositif d'allumage à l'intérieur du bloc de mélange, caractérisé par une conformation des alésages d'amenée de gaz (17, 18 respectivement 32 à 37), telle que chaque alésage engendre une perte de charge dépendante des caractéristiques physiques du composant de gaz qui s'y écoule, d'une valeur telle que les gaz entrent dans la chambre de mélange (19, respectivement 40) avec une pression au moins approximativement égale.

2. Bloc de mélange selon la revendication 1, caractérisé en ce que les alésages d'amenée de gaz (32, 33, 34, 35, 36, 37) possèdent des diamètres différents, dépendant des caractéristiques physiques des composants de gaz qui s'écoulent dans chaque alésage.

3. Bloc de mélange selon la revendication 1 ou 2, caractérisé en ce que les alésages d'amenée de gaz (17, 18) sont de longueur différente, dépendante des caractéristiques physiques des composants de gaz qui s'écoulent dans chaque alésage.

4. Bloc de mélange selon l'une des revendications 1 à 3, caractérisé en ce que les parois des alésages d'amenée de gaz (17 ; 18 respectivement 32, 33, 34, 35, 36, 37) possèdent une rugosité différentes, dépendante des caractéristiques physiques des composants de gaz qui s'écoulent dans chaque conduite.

5. Bloc de mélange selon l'une des revendications précédentes, caractérisé en ce que les alésaqes d'amenée de gaz (17; 18 respectivement 32, 33, 34, 35, 36, 37) sont reliés entre eux par un perçage transversal (40) servant de chambre de mélange (19) et qu'un alésage d'évacuation de gaz (20, respectivement 42) sort du perçage transversal et conduit le mélange combustible dans une chambre de combustion (2).

6. Bloc de mélange selon l'une des revendications 1 à 4, caractérisé en ce que les alésages d'amenée de gaz sont conformés dans la paroi d'une chambre de traitement de pièce usinée (1) comprenant une chambre de combustion (2) et que la chambre de combustion forme la chambre de mélange pour les composants de gaz.

# FIG. 1

0 203 944

FIG. 2

FIG. 3